(19) Europäisches Patentamt
European Patent Office
Office européen des brevets

(11) **EP 3 239 270 B1**

(12) **EUROPEAN PATENT SPECIFICATION**

(45) Date of publication and mention
of the grant of the patent:
**27.01.2021 Bulletin 2021/04**

(21) Application number: **15872245.4**

(22) Date of filing: **21.12.2015**

(51) Int Cl.:
*C09K 5/06* (2006.01)     *B32B 5/18* (2006.01)
*B32B 7/02* (2019.01)     *E04B 1/80* (2006.01)
*F28D 20/02* (2006.01)     *B32B 5/02* (2006.01)
*B32B 13/06* (2006.01)     *B32B 15/10* (2006.01)
*B32B 15/14* (2006.01)     *B32B 15/20* (2006.01)
*B32B 21/02* (2006.01)     *B32B 27/30* (2006.01)
*B32B 27/34* (2006.01)

(86) International application number:
**PCT/JP2015/006358**

(87) International publication number:
**WO 2016/103673 (30.06.2016 Gazette 2016/26)**

(54) **LATENT HEAT MATERIAL-IMPREGNATED LATENT HEAT BODY HAVING EXCELLENT HEAT RESISTANCE**

LATENTER, WÄRMEMATERIALIMPRÄGNIERTER LATENTWÄRMEKÖRPER MIT AUSGEZEICHNETER WÄRMEBESTÄNDIGKEIT

CORPS À CHALEUR LATENTE IMPRÉGNÉ DE MATÉRIAU À CHALEUR LATENTE PRÉSENTANT UNE EXCELLENTE RÉSISTANCE À LA CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2014 JP 2014266032**

(43) Date of publication of application:
**01.11.2017 Bulletin 2017/44**

(73) Proprietor: **EIDAI CO., LTD.**
**Osaka-shi, Osaka 559-8658 (JP)**

(72) Inventors:
• **KAWAZOE, Masanobu**
**Osaka-Shi**
**Osaka 559-8658 (JP)**
• **NISHIO, Jiro**
**Osaka-Shi**
**Osaka 559-8658 (JP)**

(74) Representative: **Mewburn Ellis LLP**
**Aurora Building**
**Counterslip**
**Bristol BS1 6BX (GB)**

(56) References cited:
WO-A1-2015/174523     WO-A1-2015/174523
JP-A- H 051 281     JP-A- H0 989 481
JP-A- 2004 075 711     JP-A- 2006 348 224
JP-A- 2010 031 635     JP-A- 2013 013 844
US-A- 4 496 415     US-A- 5 718 835
US-A1- 2012 196 040

EP 3 239 270 B1

**Description**

Technical Field

The present invention relates to a heat reservoir that can be used for various applications, such as building materials.

Background Art

As typified by "smart houses," concepts of "energy saving," "energy creation," and "energy storage" are keys to recent houses, and construction of comfortable houses that do not discharge carbon dioxide is intended. Meanwhile, there is a concept of "passive house," and house construction that has achieved high degrees of energy saving and comfortability by providing a house with high level heat insulation efficiency has drawn attention. Every house is required to have achieved an improvement in heat insulation efficiency and properties dealing with the thermal environment. Accordingly, research and development concerning building materials capable of heat storage with the aid of floors and walls of a house, thereby achieving the energy-saving and comfortable living environment, have been actively conducted.

For example, proposals and attempts of storing the natural energy such as solar light, the thermal energy generated by an air-conditioning equipment, or the thermal energy generated in daily lives in latent heat storage materials, and minimizing the changes in room temperature through endothermic and/or exothermic reactions in accordance with changes in external temperature have been made.

Documents such as Patent Documents 1 to 6 disclose techniques of imparting building materials with heat storability by combining a latent heat storage material and a building material. Patent Documents 1 to 4 each disclose a technique of impregnating porous wood molds with latent heat storage materials. Patent Document 5 discloses a heat reservoir comprising a porous material such as a plaster board which is impregnated with a melt mixture of an ethylene-$\alpha$-olefin copolymer at a given density and a latent heat reservoir. Patent Document 6 discloses a heat storage board comprising a main body of the heat storage board composed of an ethylene-based resin as a substrate, which is impregnated with a latent heat storage material, and a sheet sealing the entire surface of the latent storage board.

A latent heat storage material uses a latent heat required for a phase transition between the solid phase and the liquid phase. Accordingly, liquid exudation can be problematic. According to the techniques disclosed in Patent Documents 1 to 5, porous substrate matrix is impregnated with latent heat storage materials, so as to prevent the liquid from exuding. According to the technique disclosed in Patent Document 6, liquid exudation is prevented via sealing of the surface.

Prior Art Documents

Patent Documents

Patent Document 1: JP Patent Publication (Kokai) No. 2014-180812 A
Patent Document 2: JP Patent Publication (Kokai) No. 2014-180811 A
Patent Document 3: JP Patent Publication (Kokai) No. 2014-140981 A
Patent Document 4: JP Patent Publication (Kokai) No. 2014-140980 A
Patent Document 5: JP Patent Publication (Kokai) No. H05-1281 A
Patent Document 6: JP Patent Publication (Kokai) No. H06-34187 A

JP200475711 discloses a heat latent composition.

Summary of the Invention

Objects to Be Attained by the Invention

Conventional heat reservoirs such as those disclosed in Patent Documents 1 to 6 are aimed at suppression of exudation of latent heat storage materials within a normal temperature range, and thermostability at abnormally high temperatures caused by fire and other reasons was not taken into consideration.

For example, the heat reservoirs disclosed in Patent Documents 1 to 5 may suffer from exudation of heat storage material compositions from porous substrates at abnormally high temperatures. In the case of the heat reservoir disclosed in Patent Document 6, the substrate may exude. At abnormally high temperatures, disadvantageously, the exuded components may catch fire.

In the past, there had been no heat reservoir having thermostability at abnormally high temperatures. Accordingly, it is an object of the present invention to provide a heat reservoir with improved thermostability at abnormally high temperatures.

Means for Attaining the Objects

The present inventors found that thermostability of a heat reservoir comprising a plate-shaped porous substrate impregnated with a heat storage material composition at abnormally high temperatures could be improved by using a latent heat storage material supplemented with a thermoplastic elastomer as a heat storage material composition and covering at least one main surface of the plate-shaped porous substrate with a thermostable and radiant heat reflective layer. This has led to the completion of the present invention.

Specifically, the heat reservoir according to the present invention comprises a plate-shaped porous substrate having 2 main surfaces, a heat storage material composition impregnating into the porous substrate, and a coat layer covering at least one of the 2 main surfaces of the porous substrate, wherein the heat storage material composition comprises a latent heat storage material and a thermoplastic elastomer and the coat layer is thermostable and radiant heat reflective.

According to the present invention, a porous substrate is impregnated with a heat storage material composition comprising a latent heat storage material and a thermoplastic elastomer, so that exudation of a heat storage material composition from a porous substrate when heated can be suppressed more efficiently, compared with the case where a porous substrate is impregnated with a latent heat storage material alone or the case where a porous substrate is impregnated with a heat storage material composition comprising a high-melting-point component other than a thermoplastic elastomer in combination with a latent heat storage material. In addition, a porous substrate is impregnated with a heat storage material composition, and nails can thus be fixed at any position at the time of construction.

In addition, a porous substrate is provided with a thermostable coat layer that is capable of reflecting the radiant heat. When the heat reservoir according to the present invention is provided in a manner such that the coat layer is exposed to the heat source, accordingly, a temperature rise occurring in the heat storage material composition impregnating into the porous substrate can be suppressed, exudation of the heat storage material composition can be suppressed, and the exuded heat storage material composition can be suppressed from burning. It is preferable that the entire area of at least one main surface of the porous substrate be covered with a coat layer. As long as the aforementioned effects can be exerted, however, it may be acceptable that a part of the at least one main surface of the porous substrate is not covered with a coat layer. In such a case, such surface is covered in an area of preferably 70% or more, more preferably 80% or more, still more preferably 90% or more, further preferably 95% or more, and furthermore preferably 98% or more of the entire area.

According to a preferable embodiment of the present invention, the thermoplastic elastomer used for the heat reservoir is either an olefin-based thermoplastic elastomer or a styrene-based thermoplastic elastomer. With the use of such thermoplastic elastomer, exudation of a heat storage material composition from the porous substrate can be effectively suppressed.

According to another preferable embodiment of the present invention, both of the 2 main surfaces of the porous substrate of the heat reservoir are covered with the coat layers, which are gas-impermeable layers. Since the top surface and the back surface of the porous substrate are covered with gas-impermeable coat layers according to this embodiment, a heat storage material composition can be prevented from becoming volatile at high temperatures. Even if a volatile gas is generated, in addition, leaking of the volatile gas to the outside can be mostly suppressed. By impregnating the porous substrate with a heat storage material composition, elution of a heat storage material composition in a lateral direction is confirmed to be low, compared with the case in the absence of a porous substrate, as a result of the experiment. When both surfaces are covered with coat layers as with the case of the present embodiment, in addition, the substrate can be provided without distinguishing the top surface from the bottom surface, and it can be thus handled easily. While it is preferable that the entire areas of both main surfaces of the porous substrate be covered with coat layers, it is acceptable that a part thereof is not covered, as long as the aforementioned effects can be exerted. In such a case, such surface is covered in an area of preferably 70% or more, more preferably 80% or more, still more preferably 90% or more, further preferably 95% or more, and furthermore preferably 98% or more of the entire area.

According to another preferable embodiment of the present invention, more preferably, a surface that connects the two main surfaces of the porous substrate of the heat reservoir according to the present invention is covered with the coat layer. According to this embodiment, side edge surfaces of the porous substrate are covered with the gas-impermeable coat layers, as well as the main surfaces. Accordingly, the melted heat storage material composition and the volatile gas can be prevented from exuding and leaking, respectively, more efficiently. While it is preferable that the entire area of the surface that connects the both main surfaces of the porous substrate be covered with a coat layer, it is acceptable that a part thereof is not covered with the coat layer, as long as the aforementioned effects can be exerted.

In such a case, the surface that connects the both main surfaces of the porous substrate is covered with a coat layer in an area of preferably 70% or more, more preferably 80% or more, still more preferably 90% or more, further preferably 95% or more, and furthermore preferably 98% or more of the entire area.

According to another preferable embodiment of the present invention, the coat layer of the heat reservoir is a metal layer. According to this embodiment, thermostability and radiant heat reflective capacity of interest can be realized in a cost-effective manner.

The porous substrate impregnated with the heat storage material composition of the heat reservoir according to the present invention can be obtained by a method comprising a step of impregnation comprising impregnating the porous substrate with the liquefied heat storage material composition.

Effects of the Invention

The present invention may provide a heat reservoir having improved thermostability at abnormally high temperatures that may be caused by fire or other reasons.

Brief Description of the Drawings

Fig. 1 shows the correlation between the heating duration and the total heat value in the heating test in Test 1.
Fig. 2 shows the correlation between the heating duration and the heating rate in the heating test in Test 1.
Fig. 3 shows a photograph of the product of the present invention (with the side edge surface being covered) after the heating test in Test 1.
Fig. 4 shows a photograph of the product of the present invention (without the side edge surface being covered) after the heating test in Test 1.
Fig. 5 shows a photograph of a comparative product (without the side edge surface being covered) after the heating test in Test 1.
Fig. 6 shows the results of Test 2.
Fig. 7 shows the results of evaluation of the influence of the molecular weight and the amount of a fixing agent added on impregnation thereof into the board and exudation resistance thereof confirmed in Reference Test 1.
Fig. 8 schematically shows a cross section of the heat reservoir 1 according to an embodiment of the present invention.
Fig. 9 schematically shows a cross section of the heat reservoir 1 according to an embodiment of the present invention.
Fig. 10 schematically shows a cross section of the heat reservoir 1 according to an embodiment of the present invention.
Fig. 11 schematically shows a cross section of an interior wall structure using the heat reservoir 1 according to an embodiment of the present invention.
Fig. 12 schematically shows a cross section of an interior wall structure using the heat reservoir 1 according to an embodiment of the present invention.
Fig. 13 schematically shows a cross section of an interior wall structure using the heat reservoir 1 according to an embodiment of the present invention.
Fig. 14 schematically shows a cross section of an interior wall structure using the heat reservoir 1 according to an embodiment of the present invention.
Fig. 15 schematically shows a cross section of an interior wall structure using the heat reservoir 1 according to an embodiment of the present invention.
Fig. 16 schematically shows a cross section of an interior wall structure using the heat reservoir 1 according to an embodiment of the present invention.
Fig. 17 schematically shows a cross section of an interior wall structure using the heat reservoir 1 according to an embodiment of the present invention.

Embodiments for Carrying out the Invention

Porous substrate

Examples of porous substrates that can be used in the present invention include a wooden molded article, an inorganic fiber substrate, and a mineral substrate. Examples of wooden molded articles include a substrate comprising wood fibers integrated therein and a substrate comprising wood chips integrated therein.

A substrate comprising wood fibers integrated therein has fine pores between the wood fibers. Thus, such substrate can be impregnated with a large amount of a heat storage material composition. A substrate comprising wood fibers integrated therein can be obtained by integrating wood fibers with the aid of one or more adhesives selected from among an isocyanate adhesive, a phenol formaldehyde adhesive, a urea-formaldehyde adhesive, and a melamine formaldehyde adhesive, according to need, and forming the integrated wood fibers into a configuration of interest such as a plate via pressure molding. Examples of wood fibers that can be used include those of tropical wood (e.g., lauan) and conifers (e.g., pine and cedar). Molding may be performed via pressure heating. The density of the substrate comprising wood fibers integrated therein is preferably from 0.2 to 0.5 g/cm$^3$, and more preferably 0.2 to 0.3 g/cm$^3$. Typical examples of substrates comprising wood fibers integrated therein include boards made of wood fibers, such as a medium-density fiberboard (MDF) and an insulation board.

A substrate comprising wood chips integrated therein also has fine pores between the wood chips and inside the wood chips. Thus, such substrate can be impregnated with a large amount of a heat storage material composition. A substrate comprising wood chips integrated therein can be obtained by integrating wood chips with the aid of one or more adhesives selected from among an isocyanate adhesive, a phenol formaldehyde adhesive, a urea-formaldehyde adhesive, and a melamine formaldehyde adhesive, according to need, and forming the integrated wood chips into a configuration of interest such as a plate via pressure molding. Examples of wood chips that can be used include those of tropocal wood (e.g., lauan) and conifers (e.g., pine and cedar). Molding may be performed via pressure heating. The density of the substrate comprising wood chips integrated therein is preferably from 0.2 to 0.6 g/cm$^3$, and more preferably 0.3 to 0.5 g/cm$^3$. Typical examples of substrates comprising wood chips integrated therein include a particle board and an oriented strand board (OSB).

Examples of inorganic fiber substrates include those made of rock wool, glass wool, carbon fiber, and metal fibers, which may be formed into plates or other configurations.

Examples of mineral substrates include a gypsum plaster board, a calcium silicate board, and an autoclaved lightweight aerated concrete (ALC) board, which are prepared by forming minerals into a board (i.e., mineral boards).

The porous substrate used in the present invention is a plate-shaped substrate comprising two main surfaces. The term "plate-shaped" refers to having a configuration showing two-dimensional extension in which the dimension in a direction perpendicular to the direction of the extension (i.e., a thickness direction) is relatively smaller than the dimension in the other direction. A planar configuration is not particularly limited, as long as the conditions described above are satisfied, and it is not necessary that dimensions in a thickness direction are consistent. According to the present invention, the widest surface when the entire plate-shaped porous substrate is observed macroscopically, regardless of fine concaves and convexes on the microporous pore surfaces, is regarded as one main surface and the surface opposite therefrom is regarded as the other main surface. The "two main surfaces" are composed of the one main surface and the other main surface, one of such surfaces is generally referred to as a "top surface," and the other is referred to as a "back surface." A person skilled in the art defines a side edge surface of the plate-shaped substrate as a "butt end surface," and surfaces other than the butt end surface are equivalent to the main surfaces according to the present invention. It is not necessary that each main surface be flat, and concaves and convexes may be provided thereon.

A thickness of the plate-shaped porous substrate is not particularly limited, and it is generally from 0.5 to 3.0 cm.

Heat storage material composition

The heat storage material composition contained in the heat reservoir according to the present invention comprises at least a latent heat storage material and a thermoplastic elastomer.

A typical latent heat storage material that can be used in the present invention undergoes a phase change from solid to liquid caused by, for example, solar radiation heat provided by the sun light or heat generated by indoor air heating. From the viewpoint of the application as a residential heat storage building material, a phase change temperature (i.e., a melting point) of a latent heat storage material is preferably from 5°C to 60°C and more preferably from 15°C to 35°C.

Representative examples of latent heat storage materials include: saturated aliphatic hydrocarbons, having typically 16 to 24 carbon atoms, such as n-paraffin or paraffin wax, which may comprise n-hexadecane, n-heptadecane, n-octadecane, n-nonadecane, or a mixture of any thereof; mono- or polyunsaturated aliphatic hydrocarbons, having typically 16 to 24 carbon atoms, such as linear α-olefin, which may comprise 1-hexadecene, 1-heptadecene, 1-octadecene, 1-nonadecene, 1-eicosene, or a mixture of any thereof; long chain fatty acids, which may comprise octanoic acid, capric acid, lauric acid, myristic acid, or a mixture of any thereof; esters of such fatty acids, and polyether compounds, such as polyethylene glycol. In the case of a material that melts at 28°C, for example, n-octadecane may be selected, and in the case of a material that melts at 18°C, n-hexadecane may be selected. Further, mixtures of a plurality of latent heat storage materials having different melting points as described above may be used.

In the present invention, a thermoplastic elastomer is added to suppress exudation of a latent heat storage material. A thermoplastic elastomer that is added for such purpose may be referred to as a "fixing agent" in this specification.

A thermoplastic elastomer is a polymeric material that is elastic as with vulcanized rubber at room temperature and is softened and fluidized at high temperatures. A thermoplastic elastomer is composed of a rubber component having elasticity in its molecule (i.e., a soft segment) and a molecular constraint component for preventing plastic deformation (i.e., a hard segment), and it has properties intermediate between rubber and plastics.

Examples of thermoplastic elastomers include one or more thermoplastic elastomers selected from the group consisting of polyamide thermoplastic elastomers (TPA), polyester thermoplastic elastomers (TPC), olefin-based thermoplastic elastomers (TPO), styrene-based thermoplastic elastomer (TPS), urethane thermoplastic elastomers (TPU), and thermoplastic rubber vulcanizates (TPV) defined in JIS K6418, and other thermoplastic elastomers (TPZ). One or more thermoplastic elastomers selected from among olefin-based thermoplastic elastomers and styrene-based thermoplastic elastomers are more preferable, one or more thermoplastic elastomers selected from among styrene-based thermoplastic elastomers are further preferable, and one or more thermoplastic elastomers selected from among hydrogenated styrene-based thermoplastic elastomers are the most preferable. A mixture of a plurality of different types of thermoplastic elastomers may be used.

Examples of olefin-based thermoplastic elastomers include non-crosslinked and partially crosslinked elastomers having pseudo-crosslinked crystalline structures, and specific examples include a blend of polypropylene (PP) and ethylene propylene rubber (EPM) dispersed therein, a blend of PP and an ethylene-propylene-diene ternary copolymer (EPDM) dispersed therein, and a blend of PP and EPDM dispersed and partially crosslinked therein.

A styrene-based thermoplastic elastomer may or may not be hydrogenated.

Examples of nonhydrogenated styrene-based thermoplastic elastomers include styrene-butadiene-styrene block copolymers (SBS) and styrene-isoprene-styrene block copolymers (SIS).

Examples of hydrogenated styrene-based thermoplastic elastomers include styrene-ethylene/butylene-styrene block copolymers (SEBS), styrene-ethylene/propylene block copolymers (SEP), styrene-ethylene/propylene-styrene block copolymers (SEPS), styrene-ethylene-ethylene/propylene-styrene block copolymers (SEEPS), and a mixture of two or more thereof. Styrene-ethylene/butylene-styrene block copolymers (SEBS) and styrene-ethylene-ethylene/propylene-styrene block copolymers (SEEPS) are particularly preferable.

Styrene content in a styrene-based thermoplastic elastomer is not particularly limited, and styrene content is preferably 25% to 35% relative to the entire molecules by mass.

A ratio of a latent heat storage material to a thermoplastic elastomer in a heat storage material composition can be adequately selected. Relative to 100 parts by mass of the latent heat storage material, a thermoplastic elastomer can be contained in an amount of preferably 3 to 30 parts by mass, more preferably 5 to 25 parts by mass, further preferably 5 to 20 parts by mass, still further preferably 5 to 17 parts by mass, and furthermore preferably 5 to 14 parts by mass. When a thermoplastic elastomer is a styrene-based thermoplastic elastomer, such range is particularly suitable.

The weight average molecular weight of a thermoplastic elastomer can be adequately determined in accordance with a type of thermoplastic elastomer used, and it is preferably 50,000 to 250,000, and more preferably 100,000 to 200,000. Such preferable range is particularly suitable when a thermoplastic elastomer is a styrene-based thermoplastic elastomer.

In order to suppress exudation of a heat storage material composition containing a latent heat storage material from a porous substrate and allow a heat storage material composition to impregnate into a porous substrate, a preferable weight average molecular weight of a thermoplastic elastomer satisfies the condition (1) described below, provided that the weight average molecular weight is designated as $X \times 10^4$ and the amount of the thermoplastic elastomer relative to 100 parts by mass of the latent heat storage material in the heat storage material composition is designated as Y parts by mass.

Condition (1):

$$5 \leq X \leq 17;$$

$$5 \leq Y \leq 25;$$

$$\text{if } 5 \leq X < 10, Y \geq -2X + 25; \text{ and}$$

$$\text{if } 14 < X \leq 17, Y \leq -5X + 90$$

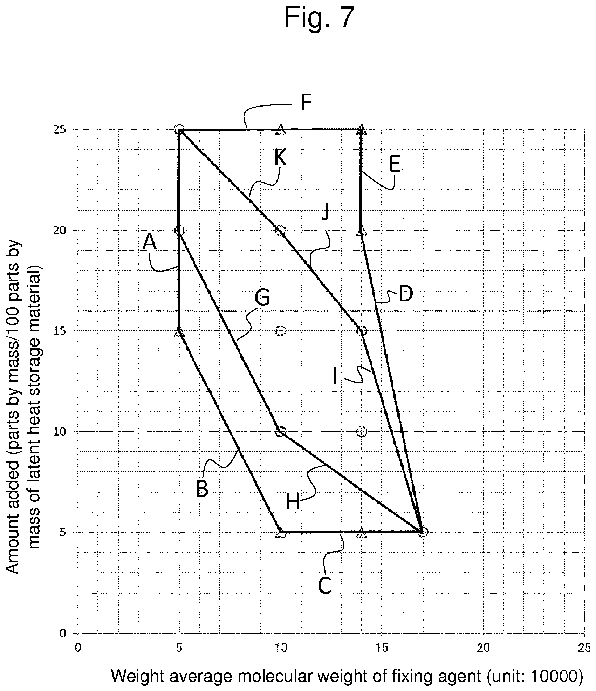

Condition (1) is concluded to be preferable on the basis of the results of evaluation of Reference Test 1 described below, which are summarized in Fig. 7. In Fig. 7, the horizontal axis indicates the weight average molecular weight of a thermoplastic elastomer and the vertical axis indicates the amount thereof added. Fig. 7 shows the results of comprehensive evaluation of impregnation of the porous substrate with the heat storage material composition and resistance to exudation from the substrate at three different scales, and there were no results evaluated as "poor". Evaluation scales are as described in detail in Reference Test 1. In Fig. 7, straight lines including line segments A to K are each represented by the following formulae.
Straight line including line segment A: X = 5
Straight line including line segment B: Y = -2X + 25
Straight line including line segment C: Y = 5
Straight line including line segment D: Y = -5X + 90
Straight line including line segment E: X = 14
Straight line including line segment F: Y = 25
Straight line including line segment G: Y = -2X + 30
Straight line including line segment H: Y = -(5/7)X + (120/7)
Straight line including line segment I: Y = -(10/3)X + (185/3)
Straight line including line segment J: Y = -1.25X + 32.5
Straight line including line segment K: Y = -X + 30

Hereafter, the expressions "a straight line including line segment A" to "a straight line including line segment K" are merely referred to as "straight line A" to "straight line K," respectively.

The range of (X and Y) satisfying the condition (1) above is equivalent to a region surrounded by straight lines A to F in Fig. 7.

In the present invention, in addition, a heat storage material composition in which X and Y satisfy the condition (2) below is preferably used.

Condition (2):

$$\text{if } 5 \leq X < 10, \ Y \geq -2X + 30 \text{ and } Y \leq -X + 30;$$

$$\text{if } 10 \leq X < 14, \ Y \geq -(5/7)X + (120/7) \text{ and } Y \leq -1.25X + 32.5; \text{ and}$$

$$\text{if } 14 \leq X \leq 17, \ Y \geq -(5/7)X + (120/7) \text{ and } Y \leq -(10/3)X + (185/3)$$

The range of (X and Y) satisfying the condition (2) is equivalent to the region surrounded by straight lines A, G, H, I, J, and K in Fig. 7. On the basis of the results of Reference Test 1 (Fig. 7), it can be said that, when the condition (2) is satisfied, exudation of the heat storage material composition from the porous substrate is less likely to occur, and the porous substrate can be impregnated with the heat storage material composition.

When the condition (1) or (2) is satisfied, in addition, the weight average molecular weight of the thermoplastic elastomer is preferably 60,000 or greater ($X \geq 6$), more preferably 75,000 or greater ($X \geq 7.5$), further preferably 85,000 or greater ($X \geq 8.5$), and most preferably 90,000 or greater ($X \geq 9$). The weight average molecular weight of the thermoplastic elastomer is preferably 160,000 or smaller ($X \leq 16$), more preferably 150,000 or smaller ($X \leq 15$), and most preferably 140,000 or smaller ($X \leq 14$). When the weight average molecular weight of the thermoplastic elastomer is within such range, it is highly likely that exudation of the heat storage material composition from the porous substrate is suppressed, and the porous substrate is easily impregnated with the heat storage material composition because of a sufficiently low viscosity level at the time of melting.

The weight average molecular weight is measured via gel permeation chromatography (GPC), and it is determined as a standard polystyrene equivalent molecular weight.

The amount of the thermoplastic elastomer is preferably 25 parts by mass or less ($Y \leq 25$), more preferably 20 parts by mass or less ($Y \leq 20$), and further preferably 17.5 parts by mass or less ($Y \leq 17.5$), relative to 100 parts by mass of the latent heat storage material. According to a preferable embodiment, the heat storage material composition comprises the thermoplastic elastomer in an amount of preferably 6 parts by mass or more ($Y \geq 6$), and more preferably 7.5 parts by mass or more ($Y \geq 7.5$), relative to 100 parts by mass of the latent heat storage material. When the amount of the thermoplastic elastomer added (Y) is within the aforementioned range, it is highly likely that exudation of the heat storage material composition from the porous substrate is suppressed and the porous substrate is easily impregnated with the heat storage material composition due to a sufficiently low viscosity level at the time of melting.

The conditions (1) and (2) and further preferable conditions described above are particularly preferable when a hydrogenated styrene-based elastomer is used as a thermoplastic elastomer.

The heat storage material composition is preferably a composition that melts to form a liquid having a viscosity of preferably 1,000 mPa·s or less, more preferably 500 mPa·s or less, further preferably 150 mPa·s or less, and most preferably 100 mPa·s or less, which is measured with the use of a B-type viscometer. When the viscosity is within such range, the porous substrate can be easily impregnated with the heat storage material composition.

The viscosity was measured with the use of a Brookfield rotational viscometer (a B-type viscometer) as defined in JIS Z8803-2011 and JIS K7117-1. Measurement was carried out with the use of a B-type viscometer manufactured by Toki Sangyo Co., Ltd. (ABS-100) with a rotor size of No. 1 at the rotation speed of 6 to 60 rpm.

Coat layer

According to the present invention, a coat layer is thermostable and radiant heat reflective. The term "thermostable" refers to having a property such that a configuration can be maintained after it is exposed to a temperature of 200°C to 600°C in the air for 10 to 60 minutes.

The radiant heat is an electromagnetic wave in a wavelength region including the infrared radiation (including the far infrared radiation) and the visible radiation, and heat is generated when a material absorbs the radiant heat. Being radiant heat reflective means having an ability to reflect the radiant heat. Because of such properties, specifically, the infrared radiation at the wavelength of 0.3 to 100 $\mu$m can be reflected by 80% or more.

In the present invention, the coat layer is more preferably a gas-impermeable layer. The gas-impermeable layer may not only be a layer that can prevent gas from permeating therethrough at all, or but also be a layer that can substantially prevent gas from permeating therethrough. At 30°C to 120°C or higher temperatures, a latent heat storage material constituting the heat storage material composition can be heated and gasified. The coat layer of the present invention preferably has gas impermeability to the extent that it is capable of blocking the gasified component of the heat storage material composition to permeate within the temperature range described above.

The coat layer of the present invention is preferably a metal layer. It is preferable that a metal layer be mainly composed of at least one metal selected from the group consisting of aluminum, copper, and iron. In the present invention, a metal layer may consist of metal throughout the area in a thickness direction. Alternatively, a metal layer may comprise a metal layer integrated with a resin layer (or resin layers), such as polyethylene terephthalate, polypropylene, polyethylene, or nylon on either or both surface(s) thereof. A metal layer may be a laminate of a plurality of metal layers. The thickness of a metal layer is not particularly limited, and it is preferably 1 $\mu$am to 1 mm, and more preferably 20 $\mu$m to 1 mm. The aforementioned thickness range is preferable for a metal layer alone. When a metal layer is integrated with the resin layer, the thickness of the metal layer component is preferably within the range described above.

The most preferable metal layer is a thin metal film, and its thickness is preferably 5 to 200 $\mu$m, and more preferably 20 to 200 $\mu$m. A thin metal film may also be a laminate of a metal component and the resin layer component. The aforementioned thickness range is preferable for a metal layer alone. When a metal layer is integrated with the resin layer, the thickness of the metal layer component is preferably within the range described above. Since a thin metal film can be easily cut, processing of the heat reservoir of the present invention, such as cutting thereof into sizes of interest, can be easily performed. In addition, a thin metal film is preferable in terms of cost efficiency and light weight.

The metal layer may be formed by allowing a metal sheet prepared in advance to adhere to the surface of the porous substrate or forming a thin metal film on the surface of the porous substrate via vapor deposition or other means. The metal sheet may be prepared via vapor deposition of a metal onto a sheet of the resin, or a sheet of the resin may be laminated onto a metal sheet. A metal sheet that is commercially available in the form of a metal foil such as an aluminum foil can be used.

The coat layer and the porous substrate can be adhered to each other through an adhesive layer provided therebetween, according to need.

Structure of heat reservoir

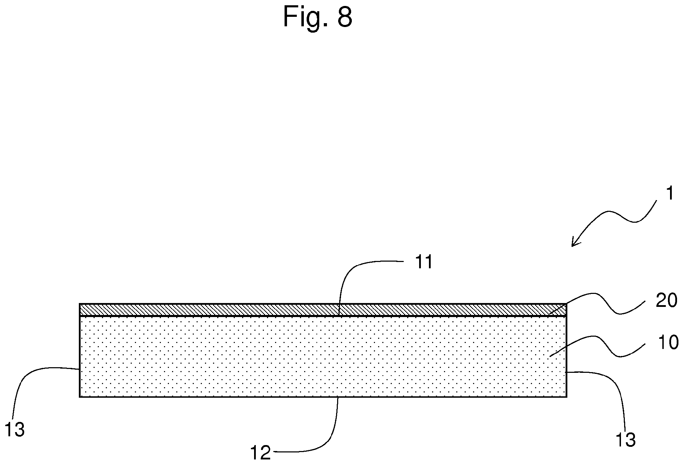

Examples of structures of the heat reservoir according to the present invention are shown in Figs. 8 to 10. Figures subsequent to Fig. 8 each schematically show a cross section obtained by cutting a plate in the through thickness direction. In the figures, dimensions, such as a thickness and a width, of the layers are exaggerated for illustrative purposes, and actual dimensions are not reflected.

The heat reservoir 1 according to the present invention shown in Fig. 8 comprises: a plate-shaped porous substrate 10 impregnated with a heat storage material composition; and a coat layer 20 that covers a main surface 11 of two main surfaces 11 and 12 of the porous substrate 10. According to an embodiment shown in Fig. 8, the other main surface 12 of the porous substrate 10 and a surface 13 (i.e., a butt end surface) that connects the two main surfaces 11 and 12 are not covered with the coat layer 20. The coat layer 20 is radiant heat reflective and thermostable. When the heat reservoir 1 is provided in such a manner that the coat layer 20 faces a heat source, accordingly, a temperature rise occurring in the heat storage material composition that had impregnated into the porous substrate 10 can be suppressed. That is, the heat reservoir 1 has thermostability.

In the heat reservoir 1 shown in Fig. 8, an additional layer may be adequately present between the porous substrate 10 and the coat layer 20 (not shown). The same applies to embodiments shown in other figures. An example of such an additional layer is an adhesive layer that bonds the porous substrate 10 to the coat layer 20.

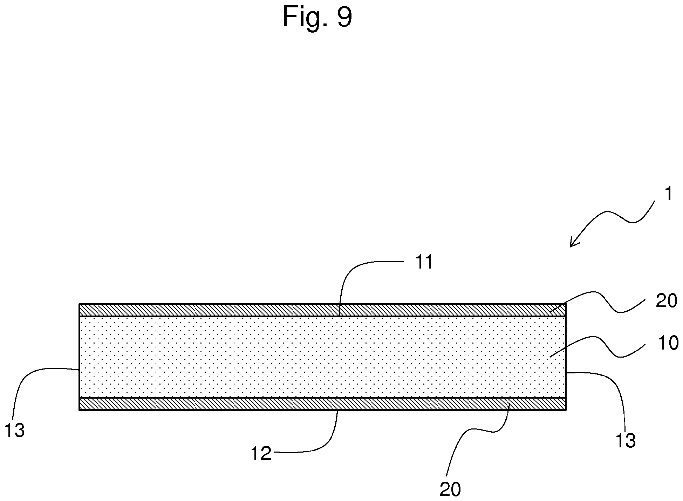

According to an embodiment of the heat reservoir 1 shown in Fig. 9, both the main surfaces 11 and 12 of the porous substrate 10 are covered with the coat layers 20. In such a case, the heat reservoir 1 can be provided without distinguishing the top surface from the bottom surface. In addition, both the two main surfaces 11 and 12 are covered with the coat layers 20. Thus, exudation of the heat storage material composition and leaking of the gasified heat storage material composition can be more effectively suppressed. According to this embodiment, the coat layer 20 is preferably gas-impermeable.

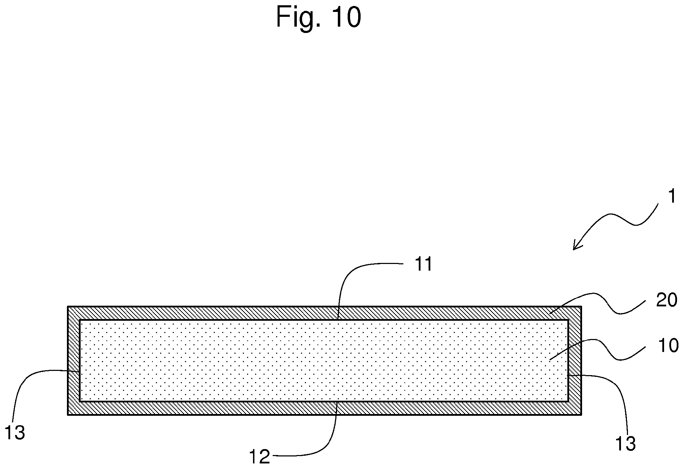

An embodiment of the heat reservoir 1 shown in Fig. 10 is further improved from the embodiment shown in Fig. 9. According to such embodiment, a surface 13 (i.e., a butt end surface) that connects the two main surfaces 11 and 12 is also covered with the coat layer 20, as well as the two main surfaces 11 and 12 of the porous substrate 10. According to this embodiment, the butt end surface 13 is also covered with the coat layer 20, as well as the two main surfaces 11 and 12 of the porous substrate 10. Accordingly, exudation of the melted heat storage material composition and leaking of volatile gas can be more effectively suppressed. It is preferable that the entire surface of the porous substrate 10 be covered with the coat layer 20.

Method for producing heat reservoir

The heat reservoir according to the present invention can be produced by a method comprising a step of impregnation in which a heat storage material composition liquefied by melting is allowed to penetrate into the porous substrate and a subsequent step of coating in which at least one main surface of the porous substrate impregnated with the heat storage material composition is covered with a coat layer.

A melted product of the heat storage material composition can be prepared by mixing the latent heat storage material and the thermoplastic elastomer and heating the mixture to a temperature at which both components become liquefied. Such components are liquefied preferably at 80°C to 140°C and more preferably at 100°C to 130°C.

According to an embodiment of the step of impregnation, the porous substrate is soaked in the liquefied heat storage material composition melted in a tank, so as to allow the heat storage material composition to penetrate into the porous substrate (i.e., the inside of the pores of the substrate). According to another embodiment of the step of impregnation, the liquefied heat storage material composition is poured or applied onto the porous substrate surface, so as to allow the heat storage material composition to penetrate into the porous substrate (i.e., the inside of the pores of the substrate).

The porous substrate impregnated with the heat storage material composition is obtained by cooling the substrate after the step of impregnation, so as to solidify the heat storage material composition (the step of solidification). The cooling may be performed via any means. Prior to the step of solidification, according to need, the porous substrate after the step of impregnation is allowed to stand upright, so as to perform liquid draining. Through this liquid draining, part of the heat storage material composition deposited on the porous substrate surface or the heat storage material composition impregnating into the porous substrate may be removed.

The step of coating may be performed without particular limitation. A coat layer may be formed on the main surface of the porous substrate impregnated with the heat storage material composition. Alternatively, a sheet constituting the coat layer may be prepared in advance and the resulting sheet may be allowed to adhere to the main surface.

Application examples of the heat reservoir

The heat reservoir 1 according to the present invention can be used in a wide variety of situations where heat storability is desired. Representative examples of applications as wall materials, floor materials, ceiling materials, and other materials are described below. In the description provided below, elements having similar functions and structures are indicated with the same numeral references, and descriptions thereof are omitted.

(Fig. 11)

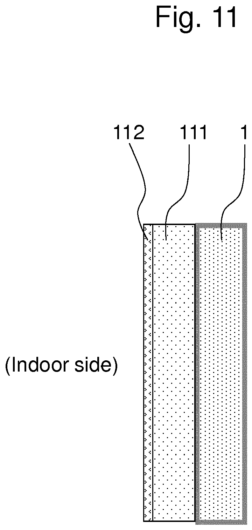

Fig. 11 shows an embodiment of an interior wall structure comprising the heat reservoir 1 and, on the indoor side thereof, a laminate of a decorative substrate 111 and a decorative material 112.

The decorative substrate 111 is not particularly limited, provided that it is a plate-shaped material used as a building material. Examples thereof that can be used include: inorganic plate materials, such as a gypsum plaster board and a calcium silicate board; woody plate materials, such as a plywood and MDF; and metal plate materials, such as a copper board and an aluminum board.

The decorative material 112 is formed by subjecting the decorative substrate 111 to processing, such as printing, coating, or lamination. Examples thereof include a decorative material which is formed by subjecting the decorative substrate 111 to decorative printing and then coating with urethane or polyester, a decorative material which is formed by laminating a paper, a vinyl chloride sheet, and an olefin sheet having decorative printing, and a decorative material which is formed by applying various types of finishing materials, such as a cloth (e.g., paper, vinyl, and fabric), a plaster, a wood, a cork, a tile, and a stone, on the surface of the decorative substrate 111.

As a building material made of the decorative substrate 111 and the decorative material 112, a board material that has been decorated in advance, such as a melamine decorative laminate plate, can be used.

(Fig. 12)

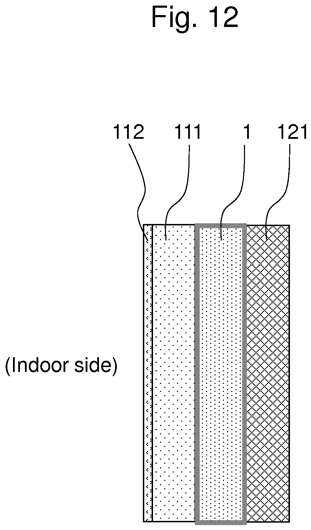

Fig. 12 shows an embodiment of an interior wall structure comprising the heat reservoir 1, on the indoor side thereof, a laminate of a decorative substrate 111 and a decorative material 112 as shown in Fig. 11, and a heat insulator 121 laminated on the outdoor side of the heat reservoir 1.
Examples of the heat insulator 121 that can be used include polystyrene foam, polyethylene foam, phenolic foam, glass wool, rock wool, urethane foam, a wood fiber board, an insulation board, and a sheep wool board. A plurality of types of heat insulators 121 may be used in adequate combination.
By providing the heat insulator 121 on the outdoor side of the heat reservoir 1, at the time of heat storage or discharge, the heat can be prevented from leaking from the heat reservoir 1 to the outside.

(Fig. 13)

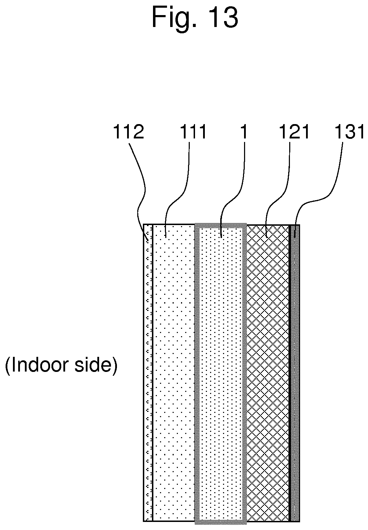

Fig. 13 shows another embodiment of the interior wall structure shown in Fig. 12, which further comprises an aluminum heat shield film 131 provided on the surface of the outdoor side of the heat insulator 121.
The aluminum heat shield film 131 may be prepared by laminating an aluminum sheet (an aluminum foil) on the surface of the heat insulator 121, or it may be formed as an aluminum layer on the surface of the heat insulator 121 via vapor deposition.
Because of the heat shield effects, the aluminum heat shield film 131 can reflect and suppress the radiant heat entering from outdoor to indoor.

(Fig. 14) (Fig. 15)

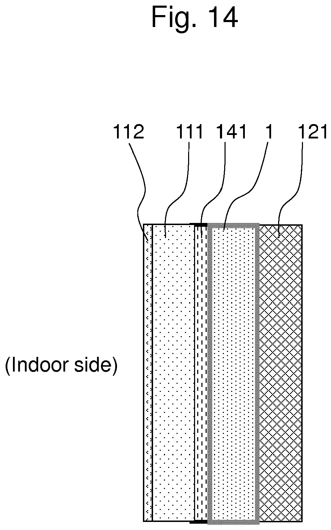

Fig. 14 shows an embodiment of an interior wall structure comprising the heat reservoir 1, on the indoor side thereof, a heater or hot/cold water panel 141, the decorative substrate 111, and the decorative material 112 provided in that order, and the heat insulator 121 on the outdoor side of the heat reservoir 1.

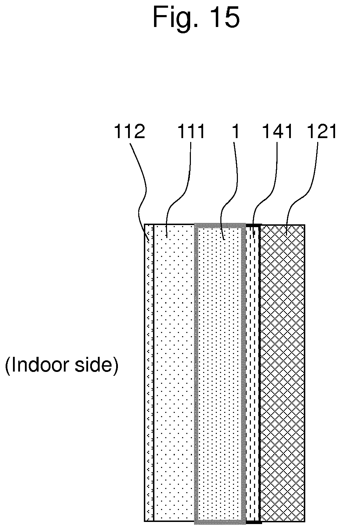

Fig. 15 shows an embodiment of an interior wall structure comprising the heat reservoir 1, on the indoor side thereof, the decorative substrate 111 and the decorative material 112 provided in that order, and the heater or hot/cold water panel 141 and the heat insulator 121 on the outdoor side of the heat reservoir 1.
Examples of the heater or hot/cold water panel 141 that can be used include an electric heater panel, a sheet heating element, hot and cold water pipes, and a hot and cold water unit.
In the structure as shown in Fig. 14 or 15, a heating or cooling medium may be provided adjacent to the heat reservoir 1 on the indoor or outdoor side thereof, so as to forcibly store a heat or a cold source. Such structure can be effectively used for midnight power service. Such structure can be used for heating and cooling on the floor, the wall, and the ceiling.

(Fig. 16) (Fig. 17)

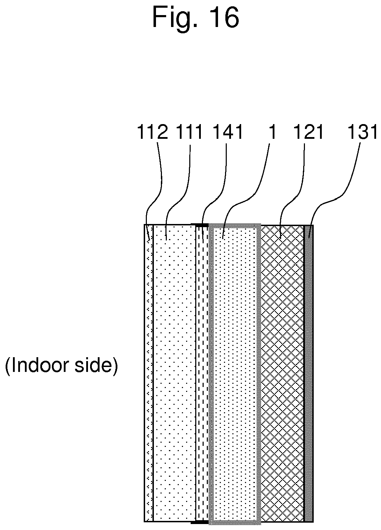

Fig. 16 shows another embodiment of the interior wall structure shown in Fig. 14 comprising an aluminum heat shield film 131 laminated on the outdoor side of the heat insulator 121.

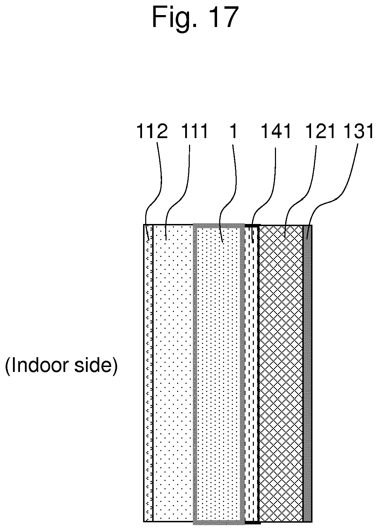

Fig. 17 shows another embodiment of the interior wall structure shown in Fig. 15 comprising an aluminum heat shield film 131 laminated on the outdoor side of the heat insulator 121.
Because of the heat shield effects, the aluminum heat shield film 131 can reflect and suppress the radiant heat entering from outdoor to indoor.

Examples

In the following tests, "part" is "by mass."

[Test 1: Comparison of the heat reservoir of the present invention and a commercially available heat reservoir]

1. Objective

This test is intended to inspect the incombustibility of the heat reservoir according to the present invention, which is prepared by covering a wood fiber board impregnated with a heat storage material composition as a prototype with an aluminum foil.

## 2. Test subject

(Invention product)

An insulation board (density: 0.27 g/cm$^3$; thickness: 10 mm) was used as a plate-shaped porous substrate. An insulation board is prepared in the form of a plate from a wood fiber as a starting material via molding, and its density is less than 0.35 g/cm$^3$.

As a latent heat storage material, $\alpha$ olefin (melting point: 32°C) was used. This $\alpha$ olefin is composed of 5% by mass or less of $C_{18}$, 40 to 60% by mass of $C_{20}$, 25 to 50% by mass of $C_{22}$, 18% by mass or less of $C_{24}$, and 1% by mass or less of $C_{26}$ $\alpha$ olefins.

As a fixing agent, a hydrogenated styrene-based thermoplastic elastomer (SEEPS) was used. The weight average molecular weight of the fixing agent was 100,000.

As a coat material constituting a coat layer, an aluminum foil (aluminum layer thickness: 50 $\mu$m, soft) was used.

As an adhesive that bonds the substrate to the coat material, an acrylic-styrene copolymer emulsion was used.

The test subject of the heat reservoir according to the present invention was prepared with the use of the materials described above in accordance with the following procedure (hereafter, it is referred to as "the invention product," according to need).

The latent heat storage material (100 parts by mass) was melt-mixed with 15 parts by mass of the fixing agent in a kneader at 120°C, and a heat storage material composition comprising the fixing agent mixed with the latent heat storage material was prepared.

The heat storage material composition was heat-melted at 120°C in a vat, the substrate (200 x 200 mm) was soaked in the molten composition, and the substrate was impregnated with the heat storage material composition. The duration of soaking was 10 minutes.

The substrate was removed from the vat 10 minutes after the initiation of soaking, and the coat material was allowed to adhere to the top surface and the back surface of the substrate over the entire area with the aid of the adhesive to form coat layers. Thus, the invention product was prepared.

(Comparative product)

As a comparative heat reservoir, a commercially available product was used. Specifically, the commercially available product is a heat storage panel, which is a plate-shaped substrate with a thickness of 5.3 mm composed of a gel-type heat storage material composition comprising paraffin with a melting point of 22°C and an ethylene-base polymer at a ratio of 60:40 by mass, with the top surface and the back surface thereof being covered with an aluminum foil (aluminum layer thickness: 100 $\mu$m, hard) .

## 3. Test Method

3.1. Method of evaluation

The heating test defined in Attachment A of JIS A 5404 in accordance with the ISO cone calorimeter method was performed.

This test is carried out with the use of an apparatus that heats a 10-cm-square test subject (10 x 10 cm) with the use of a cone-type heater and measures the oxygen concentration in the generated gas. The test subject is heated at 50 kW/m$^2$ (heater temperature: about 760°C) to catch fire from electric sparks. On the basis of the oxygen concentration reduced as a result of combustion, the heat value and the heating rate are calculated. The test method is described in detail in Attachment A of JIS A 5404. In principle, this test is carried out with the back surface and the side surfaces of the test subject being covered with aluminum foils.

The criteria for evaluation in this test are as described below (in accordance with Attachment A of JIS A 5404).

The materials satisfying all the conditions (1) to (3) within the given period of time (i.e., 20 minutes) are evaluated as "incombustible materials," the materials satisfying all the conditions (1) to (3) within the given period of time (i.e., 10 minutes) are evaluated as "semi-incombustible materials," and the materials satisfying all the conditions (1) to (3) within the given period of time (i.e., 5 minutes) are evaluated as "flame-retardant materials."

(1) The total heat value within the given period of time after the initiation of heating is 8 MJ/m$^2$ or less.
(2) The maximal heating rate within the given period of time after the initiation of heating is continuously not more than 200 kW/m$^2$ for at least 10 seconds.

(3) There are no cracks or holes that reach the back surface, which are harmful from the viewpoint of fire prevention, up to the given period of time elapsed after the initiation of heating.

### 3.2 Treatment conditions for test subject

For both the invention product and the comparative product, the test subject with the side surface thereof being covered with an aluminum tape (hereafter referred to as a "side-surface-covered") and the test subject with the side surface thereof being uncovered (hereafter referred to as a "side-surface-uncovered") were prepared.

(Side- surface-covered)

The side surfaces of the 10-cm$^2$ test subject were covered with an aluminum tape (there was no aluminum foil covering at the time of the test).

(Side- surface-uncovered)

The side surfaces of the 10-cm$^2$ test subject were not covered with an aluminum tape.

### 4. Evaluation results

### 4.1. List of Results

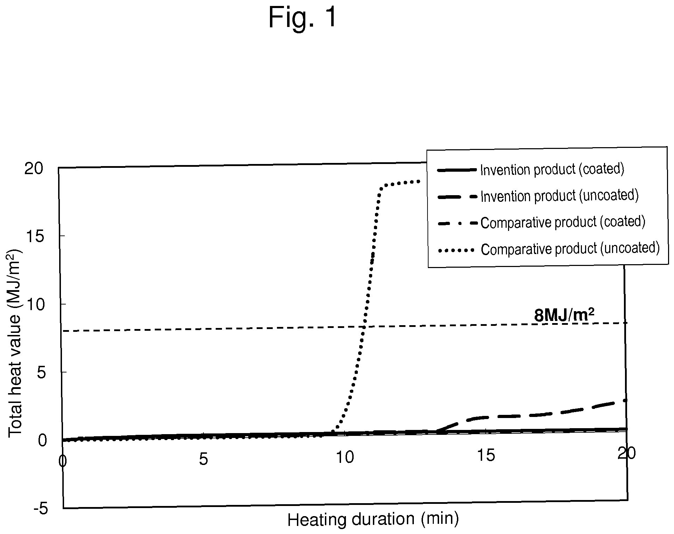

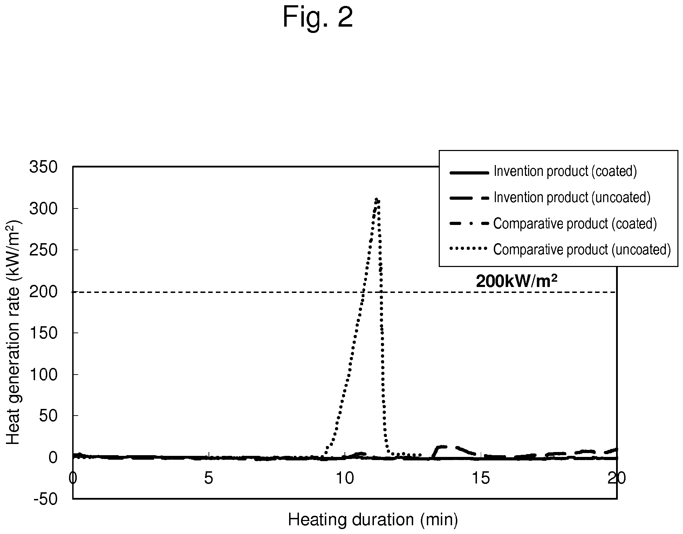

The test results are shown in Fig. 1 and Fig. 2. Fig. 1 shows the correlation between the heating duration and the total heat value. Fig. 2 shows the correlation between the heating duration and the heating rate.

The results of evaluation concerning incombustibility based on the test results are as shown below.

Table 1

|  | Invention product (side-surface-covered) | Invention product (side-surface-uncovered) | Comparative product (side-surface-covered) | Comparative product (side-surface-uncovered) |
|---|---|---|---|---|
| Total heat value (MJ/m$^2$) | ◎ (0.21) | ◎ (2.34) | ◎ (0.12) | ○ (9.03) |
| Maximum heating rate | ◎ | ◎ | ◎ | ○ |
| Maximum rate (kW/m$^2$) | 2.85 | 13.02 | 4.01 | 229.31 |
| Length of time during which the rate exceeds 200 kW/m$^2$ (sec) | 0 | 0 | 0 | 8.5 |
| Through crack | ◎ | ◎ | ◎ | ○ |

* ◎ Incombustible; ○: Semi-Incombustible; △: flame-retardant

When the side surfaces of the test subject were covered with aluminum tapes, neither the invention product nor the comparative product caught fire for 20 minutes after the initiation of heating.

When the side surfaces of the test subject were not covered with tapes, the invention product caught fire at the edge about 10 minutes after the initiation of heating. Thereafter, the test subject repeatedly caught fire and quenched the fire.

When the side surfaces of the test subject were not covered with tapes, the comparative product caught fire at the edge about 10 minutes after the initiation of heating, the heat storage material composition was then exuded at the edge from the inside, and combustion spread rapidly.

### 4.2. Conditions after heating test

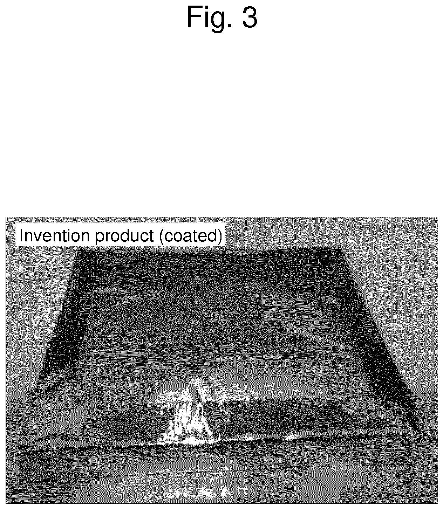

Figs. 3 to 5 each show a photograph showing the condition of the test subject after the heating test.

Fig. 3 shows a photograph of the invention product (side-surface-covered) after the test. When the side surfaces of the test subjects were covered with aluminum tapes, heat storage materials and the like in the test subjects of the invention product and of the comparative product were volatilized via heating, and aluminum foils covering the surfaces became swollen.

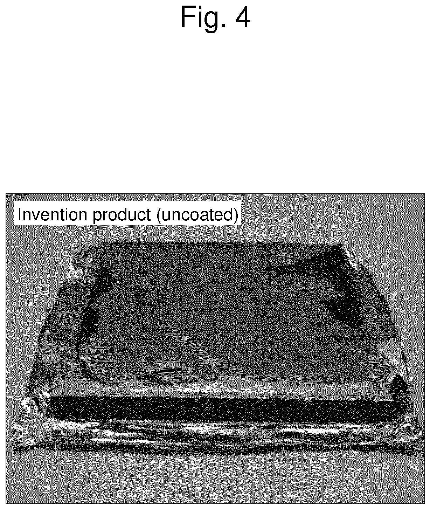

Fig. 4 shows a photograph of the invention product (side-surface-uncovered) after the test. The test subject of the invention product (side-surface-uncovered) caught fire at the edge, a burned mark remained therein, but the fiber board inside thereof was not substantially burned.

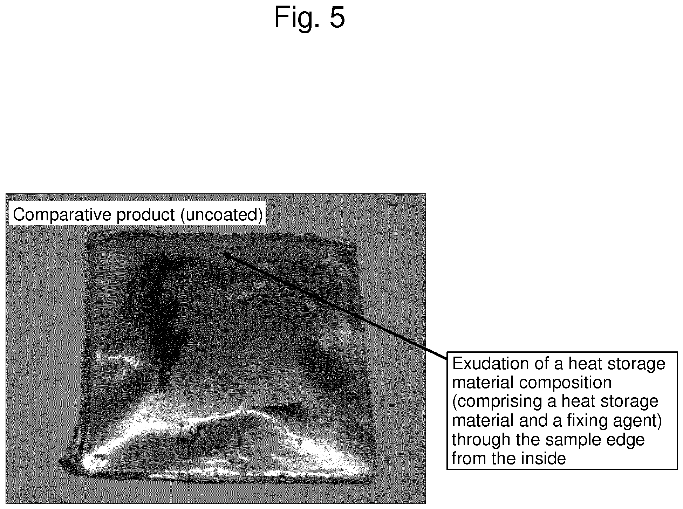

Fig. 5 shows a photograph of the comparative product (side-surface-uncovered) after the test. When the side surfaces of the test subject of the comparative product were not covered with aluminum tapes, the comparative product caught fire at the edge about 10 minutes after the initiation of heating, the heat storage material composition was then exuded at the edge of the test subject from the inside, and combustion spread rapidly.

### 5. Conclusion

As a result of the tests described above, the substrate could be made incombustible by covering the main surface of a wood fiber board impregnated with the heat storage material composition with an aluminum foil even if the heat storage material composition itself is highly likely to catch fire.

The invention product comprises a wood fiber board impregnated with a heat storage material composition. Because of such structure, it was confirmed that the heat storage material composition would be less likely to flow out of the structure even if it was heated, and combustion could be suppressed.

[Test 2: Confirmation of heat-shielding properties of aluminum foil]

### 1. Objectives

Aluminum is known to be a material exerting high heat-shielding effects on the radiant heat. The panel impregnated with the heat storage material composition was made flame retardant as a result of covering thereof with an aluminum foil as confirmed in Test 1. This is considered to result from a high degree of heat-shielding properties of an aluminum foil. By covering the panel impregnated with the heat storage material composition with an aluminum foil, heat transfer to the inside of the panel may change to a significant extent. Accordingly, the following test was intended to evaluate the influence of covering with an aluminum foil.

### 2. Test subject

As the test subject, the invention product covered with an aluminum foil on its top and back surfaces prepared in Test 1 was used.

As a comparative sample, an insulation board impregnated with the heat storage material composition, which is the invention product without an aluminum foil covering its top and back surfaces, was used.

### 3. Method of evaluation

A container was provided in an environmental test chamber, the test subject was introduced in the container and placed therein at 10°C. And then, the test subject was allowed to stand at 40°C for 7 hours and then at 10°C for 7 hours. During the storage test, the surface temperature of the test subject was measured with the elapse of time.

### 4. Results

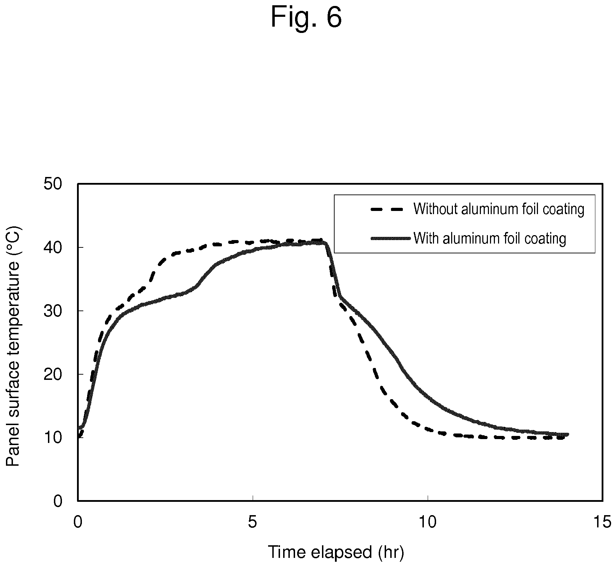

The results are shown in Fig. 6. It was confirmed that temperature change of the panel could be made moderate by covering the heat reservoir surface with an aluminum foil.

### 5. Conclusion

The heat storage material composition can moderate the temperature change rate. In addition, the temperature change rate could be made further moderate by covering the surface with aluminum foil.

In the tests detailed below, the viscosity was measured by the method involving the use of a Brookfield rotational viscometer (a B-type viscometer) as defined in JIS Z8803-2011 and JIS K7117-1. Measurement was carried out with the use of a B-type viscometer manufactured by Toki Sangyo Co., Ltd. (ABS-100) with a rotor size of No. 1 at the rotation speed of 6 to 60 rpm.

[Reference Test]

1. Reference Test 1

This test is intended to evaluate the impregnation performance of a mixture of the latent heat storage material (paraffin) and a fixing agent when a woody board is impregnated with it, and exudation resistance (i.e., the retention ability) of the mixture.

1.1 Materials

As a woody board, an insulation board (density: 0.27 g/cm$^3$; thickness: 15 mm) was used. An insulation board was prepared in the form of a plate from a wood fiber as a starting material via molding, and its density was less than 0.35 g/cm$^3$.
As a latent heat storage material, n-paraffin comprising 18 carbon atoms (melting point: 28°C) was used.
As a fixing agent, a hydrogenated styrene-based thermoplastic elastomer was used. As a hydrogenated styrene-based thermoplastic elastomer, a styrene-ethylene/butylene-styrene block copolymer (SEBS) with the weight average molecular weight of 50,000, 100,000, 140,000, or 170,000 was used.

1.2 Test method

The latent heat storage material (paraffin) and the fixing agent were added at the ratio shown in Table 2, they were melt-mixed in a kneader at 100°C to 130°C, and mixtures of the fixing agent and the latent heat storage material (i.e., the heat storage material compositions) were prepared.
Each heat storage material composition was heat-melted at 100°C to 110°C in a vat, the insulation board (200 x 200 mm) was soaked in the molten composition, and the insulation board was impregnated with the heat storage material composition. The duration of soaking was 10 minutes.

(Evaluation 1) Influence of the molecular weight and the amount of the fixing agent added on the impregnation performance

The insulation board was removed from the vat 10 minutes after the initiation of soaking. The condition of impregnation of the insulation board with the heat storage material composition was graded at a level of "good", "moderate," and "poor". In addition, the weight measured before soaking was compared with that measured after soaking to determine the impregnation rate.

(Evaluation of impregnation performance)

Good: Conditions of impregnation are satisfactory, liquid draining of the heat storage material composition is satisfactory, and substantially no coating of the heat storage material composition is formed on the board surface.
Moderate: A certain degree of impregnation is attained, liquid draining of the heat storage material composition is not very good, and a coating of the heat storage material composition is formed in a small area on the board surface.
Poor: Conditions of impregnation are poor, liquid draining of the heat storage material composition is poor, and a coating of the heat storage material composition is formed on the entire board surface.

$$\text{Impregnation rate} = (\text{board weight after impregnation} - \text{board weight before impregnation}) / (\text{board weight before impregnation}) \times 100\ (\%)$$

In addition, the viscosity of the heat storage material composition at 100°C was measured with the use of a B-type viscometer.

(Evaluation 2) Influence of the molecular weight and the amount of the fixing agent added on resistance to exudation of the heat storage material composition to the outside from the board

The board impregnated with the heat storage material composition was allowed to stand in a dryer at 40°C for 1 month. A decrease in the board weight was determined before and after the 1 month so as to calculate the rate of exudation of the heat storage material composition from the board.

$$\text{Exudation rate} = (\text{board weight before the 1 month} - \text{board weight after the 1 month}) / (\text{board weight before the 1 month}) \times 100\ (\%)$$

(Evaluation of exudation resistance)

 Good: Exudation rate of 0%
 Moderate: Exudation rate greater than 0% and less than 1%
 Poor: Exudation rate of 1% or greater

(Comprehensive evaluation)

The fixing agent was subjected to comprehensive evaluation in terms of both the impregnation performance of the heat storage material composition into the board and the resistance to exudation of the composition from the board.

 Good: Both impregnation performance and exudation resistance are good.
 Moderate: Either impregnation performance or exudation resistance is good and the other is moderate or both impregnation performance and exudation resistance are moderate.
 Poor: Either or both impregnation performance and exudation resistance is(are) poor.

1.3 Results

Table 2 and Fig. 7 show the results of evaluation.
Fig. 7 shows a graph plotting the results represented by "good", "moderate," and "poor" of the comprehensive evaluation. In Fig. 7, the molecular weight and the amount of the fixing agent added are preferably within the region surrounded by straight lines A, B, C, D, E, and F, and more preferably within the region surrounded by straight lines A, G, H, I, J, and K. Formulae indicating the straight lines are as described above.

Table 2

| Influence of the molecular weight and the amount of the fixing agent added on impregnation and exudation resistance of the board | | | | | | | |
|---|---|---|---|---|---|---|---|
| Molecular weight of fixing agent (unit: 10000) | Amount of fixing agent added (parts) | Viscosity of heat storage composition at 100°C (mP·s) | Impregnation performance Liquid draining | 10-minutes impregnation rate (%) | Exudation rate after 1 month (%) | Resistance to exudation from board | Comprehensive evaluation |
| 5 | 15 | 45 | Good | 161 | 0.2 | Moderate | Moderate |
| | 20 | 100 | Good | 116 | 0 | Good | Good |
| | 25 | 180 | Good | 89 | 0 | Good | Good |
| 10 | 5 | 10 | Good | 188 | 0.4 | Moderate | Moderate |
| | 10 | 35 | Good | 133 | 0 | Good | Good |
| | 15 | 150 | Good | 110 | 0 | Good | Good |
| | 20 | 320 | Good | 77 | 0 | Good | Good |
| | 25 | 550 | Moderate | 42 | 0 | Good | Moderate |
| 14 | 5 | 20 | Good | 132 | 0.3 | Moderate | Moderate |
| | 10 | 50 | Good | 100 | 0 | Good | Good |
| | 15 | 210 | Good | 91 | 0 | Good | Good |
| | 20 | 490 | Moderate | 43 | 0 | Good | Moderate |
| | 25 | 1000 | Moderate | 20 | 0 | Good | Moderate |
| 17 | 2 | 95 | Good | 106 | 0 | Good | Good |

## 2. Reference Test 2

This test is intended to evaluate the impregnation performance of a mixture of the latent heat storage material (a-olefin) and a fixing agent when a woody board is impregnated with the mixture.

### 2.1. Materials

As a woody board, an insulation board (density: 0.27 g/cm$^3$; thickness: 15 mm) was used.

An insulation board was prepared in the form of a plate from a wood fiber as a starting material via molding, and the density thereof was less than 0.35 g/cm$^3$.

As a latent heat storage material, $\alpha$ olefin (melting point: 32°C) was used. This $\alpha$ olefin is composed of 5% by mass or less of $C_{18}$, 40 to 60% by mass of $C_{20}$, 25 to 50% by mass of $C_{22}$, 18% by mass or less of $C_{24}$, and 1% by mass or less of $C_{26}$ $\alpha$ olefins.

As a fixing agent, a hydrogenated styrene-based thermoplastic elastomer was used. As the hydrogenated styrene-based thermoplastic elastomer, a styrene-ethylene/butylene-styrene block copolymer (SEBS) with the weight average molecular weight of 100,000 or 170,000 was used.

### 2.2 Test method

(Evaluation) Influence of melt viscosity of a mixture of a latent heat storage material ($\alpha$ olefin) and a fixing agent on impregnation performance

The latent heat storage material ($\alpha$ olefin) and the fixing agent were added at the ratio shown in Table 3, they were melt-mixed in a kneader at 100°C to 130°C, and mixtures of the fixing agent and the latent heat storage material (i.e., the heat storage material compositions) were prepared.

The heat storage material composition was heat-melted at 100°C to 110°C in a vat, the insulation board (200 x 200 mm) was soaked in the molten composition, and the insulation board was impregnated with the heat storage material composition. The duration of soaking was 10 minutes.

The insulation board was removed from the vat 10 minutes after the initiation of soaking, and the weight measured before soaking was compared with that measured after soaking to determine the impregnation rate.

$$\text{Impregnation rate} = (\text{board weight after impregnation} - \text{board weight before impregnation}) / (\text{board weight before impregnation}) \times 100\ (\%)$$

At the same time, the viscosity of the heat storage material composition at 100°C was measured with the use of a B-type viscometer.

### 2.3. Results

The results are shown in Table 3. When $\alpha$ olefin was used as the latent heat storage material, the heat-melted viscosity of the mixture of the latent heat storage material and the fixing agent (i.e., the heat storage material composition) and the impregnation performance thereof into the insulation board were substantially equivalent to the results of Evaluation 1 of Reference Test 1 in which paraffin was used as the latent heat storage material.

Table 3

| Viscosity and impregnation rate of a mixture of a latent heat storage material and a fixing agent (i.e., heat storage material composition) | | | | | |
|---|---|---|---|---|---|
| Molecular weight of fixing agent (unit: 10000) | Amount of fixing agent added (parts) | $\alpha$-Olefin | | Paraffin | |
| | | Viscosity of mixture mPa·s | Impregnation rate % | Viscosity of mixture mPa·s | Impregnation rate % |
| 10 | 5 | 12 | 182 | 10 | 188 |
| 10 | 10 | 40 | 128 | 35 | 133 |
| 10 | 15 | 146 | 106 | 150 | 110 |

(continued)

| Viscosity and impregnation rate of a mixture of a latent heat storage material and a fixing agent (i.e., heat storage material composition) | | | | | |
|---|---|---|---|---|---|
| Molecular weight of fixing agent (unit: 10000) | Amount of fixing agent added (parts) | α-Olefin | | Paraffin | |
| | | Viscosity of mixture mPa·s | Impregnation rate % | Viscosity of mixture mPa·s | Impregnation rate % |
| 17 | 5 | 100 | 100 | 95 | 106 |

3. Reference Test 3

This test is intended to evaluate the performance of impregnation of the latent heat storage material into an inorganic fiber board.

3.1. Materials

As substrates to be impregnated, an insulation board (IB) and a rock wool board (RB) were used.
An insulation board was a low-density wood fiber board (thickness: 12 mm; density: 0.26 g/cm$^3$).
A rock wool board was a low-density inorganic fiber board, which was prepared by dissolving iron and steel slags at high temperature to generate artificial mineral fibers, and forming the artificial mineral fibers into a board (thickness: 11 mm; density: 0.34 g/cm$^3$).
As a latent heat storage material, α olefin (melting point: 32°C) was used. This α olefin is composed of 5% by mass or less of $C_{18}$, 40 to 60% by mass of $C_{20}$, 25 to 50% by mass of $C_{22}$, 18% by mass or less of $C_{24}$, and 1% by mass or less of $C_{26}$ α olefins.
As a fixing agent, a hydrogenated styrene-based thermoplastic elastomer (styrene-ethylene/butylene-styrene block copolymer (SEBS)) with the weight average molecular weight of 100,000 was used.

3.2 Test method

The SEBS was added in an amount of 15 parts to 100 parts of the latent heat storage material, they were melt-mixed in a kneader at 100°C to 130°C, and a mixture of the fixing agent and the latent heat storage material (i.e., the heat storage material composition) was prepared.
The heat storage material composition was heat-melted at 100°C to 110°C in a vat, the insulation board (200 x 200 mm) was soaked in the molten composition, and the insulation board was impregnated with the mixture. The durations of soaking were 2, 5, 10, and 20 minutes.

(Evaluation 1) Evaluation of the impregnation performance of the heat storage material composition into the board

The substrate was removed from the vat after the elapse of the given period of soaking, and the weight measured before soaking was compared with that measured after soaking to determine the impregnation rate.

$$\text{Impregnation rate} = (\text{board weight after impregnation - board weight before impregnation}) /$$

$$(\text{board weight before impregnation}) \text{ x } 100 \text{ (\%)}$$

$$\text{Impregnation amount} = \text{board density (kg/m}^3\text{)} \text{ x board thickness (m) x impregnation (\%) / 100}$$

$$(\text{kg/m}^2)$$

(Evaluation 2) Evaluation of resistance to exudation of the heat storage material composition to the outside from the board

The board impregnated with the heat storage material composition was allowed to stand in a dryer at 40°C for 1 month. A decrease in the board weight was determined before and after the 1 month so as to calculate the rate of exudation of the heat storage material composition from the board.

Exudation rate = (board weight before the 1 month − board weight after the 1 month) / (board weight before the 1 month) × 100 (%)

5.3 Results

The results are shown in Table 4.

Table 4

| Impregnation time, impregnation rate, impregnation amnount, and exudation rate of IB and RB | | | | | |
|---|---|---|---|---|---|
| Substrate to be impregnated | Density g/cm$^3$ | Impregnation time Minute | Impregnation rate % | Impregnation amount kg/m$^2$ | Exudation rate % |
| IB | 0.26 | 2 | 117 | 3.7 | 0 |
| | 0.26 | 5 | 153 | 4.8 | 0 |
| | 0.26 | 10 | 203 | 6.3 | 0 |
| | 0.27 | 20 | 197 | 6.4 | 0 |
| RB | 0.35 | 2 | 120 | 5.0 | 0 |
| | 0.34 | 5 | 146 | 6.0 | 0 |
| | 0.34 | 10 | 155 | 6.3 | 0 |
| | 0.34 | 20 | 147 | 6.0 | 0 |

RB showed an impregnation amount comparable to that of IB. Accordingly, it was confirmed that the heat storage material composition would satisfactorily impregnate into inorganic fiber boards, as well as into organic fiber boards. While RB exhibited a lower impregnation rate than IB, such difference was caused by different board densities.
The boards comprising RB and IB impregnated with the heat storage material composition, respectively, were allowed to stand in a dryer at 40°C for 1 month. As a result, the exudation rates of the heat storage material composition from such boards were found to be 0%.

4. Reference Test 4

This test is intended to find a fixing agent that is excellent in immobilization of a latent heat storage material (paraffin) and excellent in impregnation when heat melted.

4.1 Materials

As a latent heat storage material, n-paraffin comprising 18 carbon atoms (melting point: 28°C) was used.
As a hydrogenated styrene-based thermoplastic elastomer, a styrene-ethylene/butylene-styrene block copolymer (SEBS) with the weight average molecular weight of 280,000 was used.

4.2 Test method

A fixing agent (10 parts) was added to 100 parts of a latent heat storage material, and the mixture was melt-mixed with heating at 100°C to 130°C. As fixing agents, the agents shown in the table below were used.
The mixture was melted at 100°C, and the viscosity was evaluated in that state with the use of a B-type viscometer.
About 100 g of the melt mixture was introduced into a 200-cc cup, and the mixture was cooled to solidify at 20°C.

4.3 Evaluation of fixing agent performance

Evaluation 1:

The cup containing the solidified mixture was placed in a dryer at 40°C, and the conditions of the mixture and the occurrence of exudation of the latent heat storage material were inspected 1 day later.

Evaluation 2:

Many holes each having a diameter of about 2 mm were opened at the bottom of the cup containing the solidified mixture, the cup was stored in a dryer at 40°C for 3 days, and the amount of the exuding substance was evaluated. In addition, whether or not the exuding substance was the latent heat storage material or the mixture of the latent heat storage material and the fixing agent was evaluated. The amount of the exuding substance was determined in terms of a percentage of the mass of the exuding substance over the mass of the tested mixture.

4.4. Results of Evaluation 1

The results of Evaluation 1 (in terms of the status of compositions and evaluation of exudation when heated at 40°C) are shown in Table 5.
When the hydrogenated styrene-based thermoplastic elastomer was used as a fixing agent, exudation was not observed when the latent heat storage material was liquefied (40°C), and the mixture remained in a gel state.

Table 5

| Fixing agent | | | Heat storage material/fixing agent mixture (heat storage material composition) | | |
|---|---|---|---|---|---|
| Type | Melting point (°C) | Molecular weight (unit: 10000) | Viscosity when melted at 100°C (mPa·s) | Material state when heated at 40°C*1 | Exudation of heat storage material when heated at 40°C |
| Paraffin wax | 69 | - | 5 | × | - |
| Polyethylene wax | 64 | - | 5 | × | - |
| Polyethylene wax | 107 | - | 5 | × | - |
| Low-density polyethylene | 90 | - | 80 | ○ | Occurred |
| Ethylene/vinyl acetate copolymer resin | 89 | - | 30 | ○ | Occurred |
| Hydrogenated styrene-based thermoplastic elastomer | - | 28 | 1,000 or more | ○ | Not occurred |
| 12-Hydroxystearic acid | 75 | - | 5 | ○ | Occurred |

*1: Material state when heated at 40°C: ○: gel; △: highly viscous liquid; ×: liquid

## 4.5. Results of Evaluation 2

The results of Evaluation 2 (i.e., evaluation of the amount of elution and the eluted substance when stored at 40°C) are shown in Table 6.

In the case of the test groups involving the use of substances other than elastomers as fixing agents, only the latent heat storage material was liquefied when heated at 40°C, and it was eluted from the mixture.

When a hydrogenated styrene-based thermoplastic elastomer was used as a fixing agent, it was found that elution occurring when heated at 40°C could be suppressed.

Table 6

| Fixing agent | | | Heat storage material/fixing agent mixture (heat storage material composition) | | | |
|---|---|---|---|---|---|---|
| Type | Melting point (°C) | Molecular weight (unit: 10000) | Viscosity when melted at 100°C (mPa·s) | Exudation rate when heated at 40°C | | Substance exuding when heated at 40°C |
| | | | | 1 day later (%) | 3 days later (%) | |
| Low-density polyethylene | 90 | - | 80 | 17.3 | 20.5 | Heat storage material |
| Ethylene/vinyl acetate copolymer resin | 89 | - | 30 | 33.5 | 38.4 | Heat storage material |
| Hydrogenated styrene-based thermoplastic elastomer | - | 28 | 1,000 or more | 0.0 | 0.1 | None |
| 12-Hydroxystearic acid | 75 | - | 5 | 16.0 | 21.4 | Heat storage material |

**Claims**

1.  A heat reservoir comprising:

    a plate-shaped porous substrate having 2 main surfaces;
    a heat storage material composition impregnating into the porous substrate; and
    a coat layer covering at least one of the 2 main surfaces of the porous substrate,
    wherein the heat storage material composition comprises a latent heat storage material and a thermoplastic elastomer,
    wherein the coat layer has a property such that a configuration can be maintained after it is exposed to a temperature of 200°C to 600°C in the air for 10 to 60 minutes,
    wherein the coat layer can reflect an infrared radiation at a wavelength of 0.3 to 100 $\mu$m by 80% or more, and
    wherein the porous substrate is a wooden molded article.

2.  The heat reservoir according to claim 1, wherein the thermoplastic elastomer is at least either an olefin-based thermoplastic elastomer or a styrene-based thermoplastic elastomer.

3.  The heat reservoir according to claim 1 or 2, wherein both the 2 main surfaces of the porous substrate are covered by the coat layers and the coat layers are gas-impermeable, wherein the coat layer can prevent gas from permeating therethrough.

4.  The heat reservoir according to claim 3, wherein a surface that connects the 2 main surfaces of the porous substrate is covered by the coat layer.

5.  The heat reservoir according to any one of claims 1 to 4, wherein the coat layer is a thin metal film having a thickness of 5 to 200 $\mu$m.

**Patentansprüche**

1.  Wärmespeicher, der Folgendes umfasst:

    ein plattenförmiges, poröses Substrat mit 2 Hauptflächen;
    eine Wärmespeichermaterialzusammensetzung, mit dem das poröse Substrat imprägniert ist; und
    eine Überzugsschicht, die zumindest eine der 2 Hauptflächen des porösen Substrats bedeckt,
    wobei die Wärmespeichermaterialzusammensetzung ein Latentwärmespeichermaterial und ein thermoplastisches Elastomer umfasst,
    wobei die Überzugsschicht eine solche Eigenschaft aufweist, dass eine Konfiguration aufrechterhalten werden kann, nachdem sie 10 bis 60 Minuten lang einer Temperatur von 200 °C bis 600 °C an der Luft ausgesetzt wurde,
    wobei die Überzugsschicht eine Infrarotstrahlung mit einer Wellenlänge von 0,3 bis 100 $\mu$m zu 80 % oder mehr reflektieren kann, und
    wobei das poröse Substrat ein Holz beinhaltender Formkörper ist.

2.  Wärmespeicher nach Anspruch 1, wobei das thermoplastische Elastomer entweder ein thermoplastisches Elastomer auf Olefinbasis oder ein thermoplastisches Elastomer auf Styrolbasis ist.

3.  Wärmespeicher nach Anspruch 1 oder 2, wobei die 2 Hauptflächen des porösen Substrats beide mit den Überzugsschichten überzogen sind und die Überzugsschichten gasundurchlässig sind, wobei die Überzugsschicht verhindern kann, dass Gas durch sie hindurchdringt.

4.  Wärmespeicher nach Anspruch 3, wobei eine Oberfläche, welche die 2 Hauptflächen des porösen Substrats verbindet, mit der Überzugsschicht überzogen ist.

5.  Wärmespeicher nach einem der Ansprüche 1 bis 4, wobei die Überzugsschicht ein dünner Metallfilm mit einer Dicke von 5 bis 200 $\mu$m ist.

EP 3 239 270 B1

**Revendications**

1. Réservoir de chaleur comprenant :

   un substrat poreux en forme de plaque ayant deux surfaces principales ;
   une composition de matériau de stockage de chaleur s'imprégnant dans le substrat poreux ; et
   une couche de revêtement recouvrant au moins l'une des deux surfaces principales du substrat poreux,
   dans lequel la composition de matériau de stockage de chaleur comprend un matériau de stockage de chaleur latente et un élastomère thermoplastique,
   dans lequel la couche de revêtement a une propriété telle qu'une configuration peut être maintenue après une exposition à une température de 200°C à 600°C dans l'air pendant 10 à 60 minutes,
   dans lequel la couche de revêtement peut réfléchir à 80 % ou plus un rayonnement infrarouge à une longueur d'onde de 0,3 à 100 $\mu$m, et
   dans lequel le substrat poreux est un article moulé en bois.

2. Réservoir de chaleur selon la revendication 1, dans lequel l'élastomère thermoplastique est au moins un élastomère thermoplastique à base d'oléfine ou un élastomère thermoplastique à base de styrène.

3. Réservoir de chaleur selon la revendication 1 ou 2, dans lequel les deux surfaces principales du substrat poreux sont recouvertes par les couches de revêtement et les couches de revêtement sont imperméables aux gaz, dans lequel la couche de revêtement peut empêcher du gaz de passer à travers celle-ci.

4. Réservoir de chaleur selon la revendication 3, dans lequel une surface qui relie les deux surfaces principales du substrat poreux est recouverte par la couche de revêtement.

5. Réservoir de chaleur selon l'une quelconque des revendications 1 à 4, dans lequel la couche de revêtement est un film métallique mince ayant une épaisseur de 5 à 200 $\mu$m.

# Fig. 1

# Fig. 2

# Fig. 3

Invention product (coated)

# Fig. 4

Invention product (uncoated)

# Fig. 5

Comparative product (uncoated)

Exudation of a heat storage material composition (comprising a heat storage material and a fixing agent) through the sample edge from the inside

# Fig. 6

# Fig. 7

Fig. 8

Fig. 9

Fig. 10

# Fig. 11

112    111    1

(Indoor side)

# Fig. 12

# Fig. 13

112    111    1    121    131

(Indoor side)

# Fig. 14

112　111　141　1　121

(Indoor side)

# Fig. 15

112　111　1　141　121

(Indoor side)

# Fig. 16

112 111 141   1  121   131

(Indoor side)

# Fig. 17

112  111  1  141  121  131

(Indoor side)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014180812 A
- JP 2014180811 A
- JP 2014140981 A
- JP 2014140980 A

- JP H051281 A
- JP H0634187 A
- JP 200475711 B